# EUROPEAN PATENT APPLICATION

(11) **EP 0 905 511 A1**
(43) Date of publication of application: **31.03.1999**
(21) Application number: 97307499.0
(22) Date of filing: 25.09.1997
(51) Int. Cl.: G01N 27/00, G01N 27/447

(54) **Capillary holder**

(71) Applicant: Beckman Coulter, Inc., Fullerton, CA 92834-3100 (US)
(72) Inventor: Keenan, Charles A., Irvine, California 92612 (US); Peterson, Brian D., Ontario, California 91761 (US); Pentoney, Stephen L., Jr., Chino Hills, California 91709 (US); Mc Neal, Jack D., Long Beach, California 90803 (US)
(74) Representative: Ede, Eric

(57) **Abstract**

A holder (10) is provided for securing a capillary (30) having a window section (28) including first and second edges (46) (48) to a mount (80). The holder (10) comprises a retaining surface (14) for securing the capillary (30) to the holder (10) and a mounting surface (18) for detachably securing the holder (10) to the mount (80). The retaining surface (14) is attached to the capillary (30) proximate to the opposed first and second edges (46), (48), with a portion of the window section (28) exposed. Since the capillary (30) is secured proximate the opposed first and second edges (46), (48), the fragile capillary window section (28) is protected during manufacturing or installation into an electrophoretic system (32). The retaining surface (14) preferably is sized and shaped to retain a plurality of capillaries (30) to allow for the substantially simultaneous testing of multiple capillaries (30). Optimally, the mounting surface (18) secures the holder (10) to the mount (80) with the capillaries (30) in fluid communication with a support medium supply (106) so that the support medium inside each capillary (30) can be replaced without removing each capillary (30) from the mount (80).

## Description

### BACKGROUND

This application is a continuation-in-part of application serial number 08/518,285 entitled "Electrophoretic System Including Means For Replacing Separation Medium" filed August 23, 1995, (Beckman # 129D-1276) by Pentoney, Jr., et al. which is currently pending. The content of U.S. Application Serial No. 08/518,285 is incorporated herein by reference.

### Field of the Invention

The present invention relates to capillary holders useful in capillary electrophoresis instruments. More particularly, the present invention involves holders which secure and protect capillaries during their installation and subsequent use in electrophoretic separation.

### Description of Related Art

A detailed description of capillary electrophoresis is provided in U.S. Patent No. 4,675,300 issued to Zare et al. and U.S. Patent No. 5,484,571, issued to Pentoney, Jr. et al., both of which are incorporated herein by reference.

Capillary electrophoresis is commonly used in analytical and biomedical research for the rapid separation and analysis of charged species including synthetic polynucleotides, DNA sequencing fragments, DNA restriction fragments, amino acids, optical isomers of dansyl amino acids, and the separation of proteins, viruses and bacteria.

Capillary electrophoresis typically utilizes an electrokinetic differential to separate and transport components of a sample inside a capillary. A variety of detectors are available for detecting the sample components including uv-visible detection, electrochemical detection and more recently laser induced fluorescence detection which involves labeling sample components with a fluorescent tag, such as, e.g., fluorescein.

Laser induced fluorescence utilizes one or more lasers to illuminate a window section of the capillary. This illumination results in the laser excitation of fluorescent material within the window section and causes the fluorescent material to emit radiation. These emission are collected by a collection device and sent to a detector which converts the emission energy to a usable signal for analysis. Many capillary systems will accommodate multiple fluorescent labels each of which has its own emission characteristic or emission wavelength. Accordingly, information about the nature of many sample components can be obtained by collecting the fluorescent emissions from the components and noting the wavelength and/or intensity of the emission.

In order to increase sample throughput, recent capillary electrophoresis system designs incorporate multiple capillaries in a single system. Many of these systems use only a single detector to interrogate and detect sample components in multiple capillaries. In order to handle and install multiple capillaries, great care must be taken to protect the capillaries and guide them into position. Moreover, since it is desirable to collect as much of the fluorescent emissions as possible to maximize the detection sensitivity, proper alignment between a laser or the radiation source, each capillary window section, and the fluorescent emissions collector is critical. When multiple capillary systems are utilized, installing the capillaries and properly aligning each capillary window can be very challenging.

Typical capillaries are in a tubular configuration having a wall thickness of between 25-500 microns. The wall is made of glass, fused silica or an organic material such as polytetrafluoroethylene, commonly sold under the trademark "Teflon" by DuPont. In order to protect fused silica capillaries the wall is strengthened with a polyimide coating. However, the polyimide coating is removed from the capillary window section to allow light to pass. resulting in a relatively weak and fragile capillary window section. Thus a major consideration in installing and removing capillaries is to avoid damaging the window and breaking the capillaries.

The concern for protecting and securing capillaries is especially critical for high volume users. Although capillaries have long useful lives, they are not indefinite and they need to be removed and replaced. The primary reason for replacing capillaries is the degradation and the loss of interior wall coatings which are introduced on the walls to reduce or eliminate electroosmotic flow during the electrophoretic process. Moreover, many electrophoretic separations require that the separation medium be pumped from each capillary and replaced by pumping in fresh medium after each separation. Thus, the capillaries need to be secured during the separation medium replacement process and they need to be protected when they are replaced and aligned.

One way of retaining a single capillary is provided in U.S. Patent No. 5,484,571. With reference to Figure 4 of U.S. Patent No. 5,484,571, the capillary can be inserted through and retained by small holes in the sides of a parabolic reflector. However, this system is not entirely satisfactory since the fragile capillary window section is not protected during the capillary coating process or its installation into the parabolic reflector. Additionally, in this system the window section can be difficult to position properly in front of the focal spot of the light source and it holds only one capillary.

Accordingly, there is a need for a device that supports the window section of the capillary during its installation into an electrophoretic system, and that facilitates the correct alignment between the window section and the focal spot of the light source. Further, there is a need for a device which retains a plurality of capillaries and allows for the replacement of the support medium within the capillary without removing the capillary from the electrophoretic system.

### SUMMARY

The present invention is directed to a capillary holder that satisfies these needs. A capillary holder having features of the present invention includes a retaining surface for securing a capillary to the holder and a mounting surface. The capillary includes a window section having opposed first and second edges. The retaining surface secures the capillary proximate to the first and second edges to protect the window section. The mounting surface detachably secures the holder to a mount with the capillary window section protected by the retaining surface.

As described in detail below, the capillary holder is capable of (i) supporting the window section during manufacturing and installation into an electrophoretic system, (ii) maintaining the window section in correct alignment with a focal spot of an electrophoretic system, (iii) securedly retaining a plurality of capillaries, and (iv) allowing for support medium replacement without removing the capillary or capillaries from the electrophoretic system.

The retaining surface can include a plurality of holder tabs extending forwardly from a front surface of a holder body. Typically, each capillary is secured to a first holder tab proximate the first edge of the window section and a second holder tab proximate the second edge of the window section to support the window section. An adhesive can be used for fixedly securing each capillary to the holder tabs.

Preferably, the retaining surface is sized to retain a plurality of capillaries with a portion of each window section of each capillary exposed. This allows for substantially simultaneous testing of a sample solution in a number of capillaries, thereby increasing the system throughput.

The mounting surface can be a tubular member sized and shaped to fit within a mount aperture of the mount. Further, the holder can include a holder stop retaining the window section(s) at the proper height above the mount and an alignment member aligning the capillary or capillaries relative to the focal spot. Since the distance between the holder stop and the window section is fixed and the alignment member maintains alignment of the holder, the holder can be attached to a manufacturing stand for precisely manufacturing the window section and subsequently installed in correct alignment with the focal spot in the electrophoretic system.

Optimally, the mounting surface secures the holder to the mount with the capillary or capillaries in fluid communication with a support medium supply so that the support medium in the capillary or capillaries can be replaced without removing the capillaries from the system. This can be accomplished by using (i) a capillary seal for sealing an interface formed between an external surface of the capillary and the mounting surface and (ii) a holder seal for sealing an interface formed between the mounting surface and the support medium supply.

Thus, the present invention provides a holder which supports the window section of the capillary during manufacturing and installation into the electrophoretic system and contributes to maintaining the correct alignment between the window section and the focal spot of the light source. Further, the holder is capable of retaining a plurality of capillaries and allowing for sample replacement within the capillaries without removing the capillaries from the electrophoretic system.

### BRIEF DESCRIPTION OF THE DRAWINGS

These and other features, aspects and advantages of the present invention will become better understood with reference to the following description, appended claims and accompanying drawings where:
Figure 1 is a perspective view of a holder having features of the present invention and a plurality of capillaries;
Figure 2 is an exploded view taken at line 2 in Figure 1;
Figure 3 is a cutaway view taken from line 3-3 in Figure 1;
Figure 4 is a cutaway view taken from line 4-4 in Figure 1;
Figure 5 is a bottom plan view of the holder of Figure 1;
Figure 6 is a perspective view of the holder of Figure 1 and a portion of an electrophoretic system in partial cutaway;
Figure 7 is a cutaway view taken from line 7-7 in Figure 6; and
Figure 8 is a schematic view of a portion of an electrophoretic system having features of the present invention.

### DESCRIPTION OF THE INVENTION

With reference to the Figures, a holder **10** according to the present invention comprises (i) a holder body **12**; (ii) a retaining surface **14**; (iii) an adhesive **16**; (iv) a mounting surface **18**; (v) a holder stop **20**; (vi) an alignment member **22**; (vii) a capillary seal **24**; and (viii) a holder seal **26**.

The holder **10** is useful in any application which requires a window section **28** of a capillary **30** or multiple capillaries to be accurately positioned and secured during manufacturing or installation into an electrophoretic system 32. The present invention is also useful for alternate capillary detection systems (not shown) including UV and visible detection.

Each capillary **30** comprises a tubular wall **34** having opposed, open, first and second ends **36**, **38**. Each capillary **30** has an inside diameter **40** of between 5 to 500 microns and typically less than 200 microns. The wall **34** of the capillary **30** is made of glass, fused silica or an organic material such as polytetrafluorethyelene, commonly sold under the trademark "Teflon" by DuPont. An external surface **44** of the wall **34** of each capillary includes a polyimide coating to strengthen the wall **34**. The window section **28** is the area which is illuminated by a light source (not shown) during testing and is not covered by the polyimide coating. The window section **28** includes opposed, first and second edges 46, 48.

The capillary **30** is filled with a sample solution (not shown) comprising of a separation support medium (not shown) such as an electrolyte solution, gel electrolyte or other suitable conductive medium and the sample (not shown) to be electrophoretically separated. The sample can be injected into the capillary **30** by any number of conventional technologies.

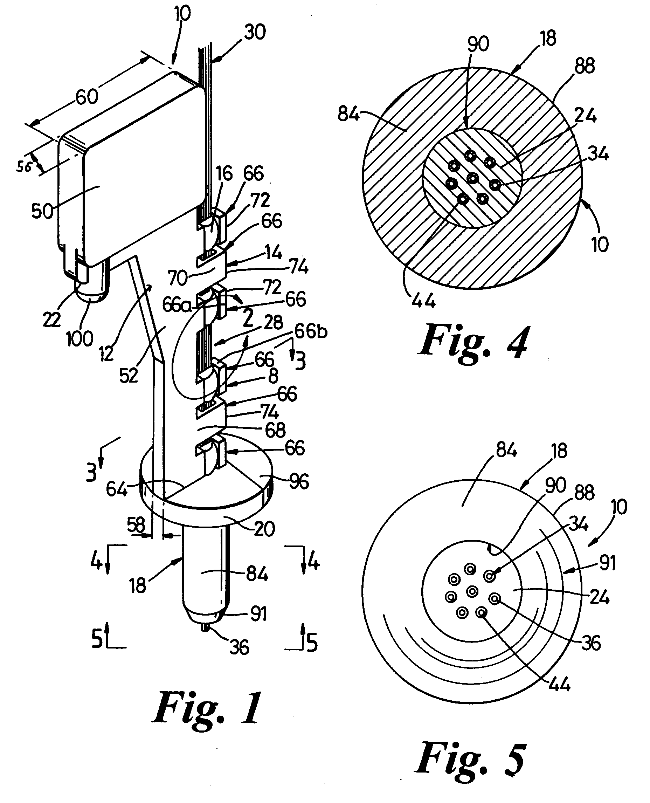

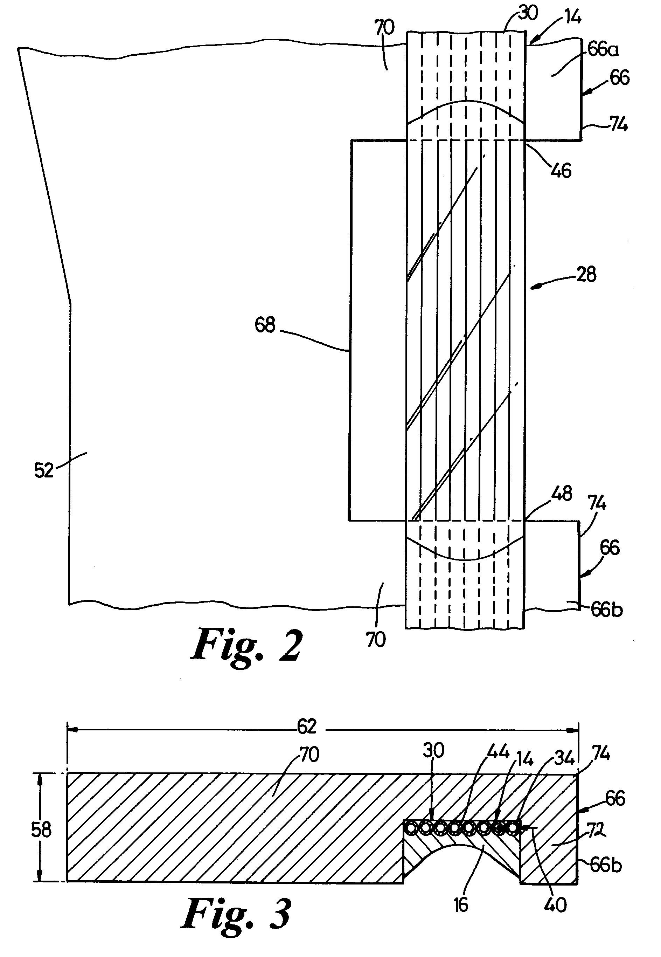

Referring to Fig. 1, the holder body **12** connects the retaining surface **14** to the mounting surface **18**, the holder stop **20** and the alignment member **22**. The design of the holder body **12** varies according to the design of the electrophoretic system **32**. In the embodiment shown in the Figures, the holder body **12** is "key" shaped having a thin, rectangular upper section **50** and a thinner, rectangular strip **52** extending downwardly from the upper section **50**. The holder body **12** shown in Figure 1, is about one and five-eighths (1-5/8) inches long. Referring to Fig. 1 and 3, the upper section **50** has a thickness **56** of about one-eighth (1/8) of an inch while the strip **52** has a thickness **58** of about one-sixteenth (1/16) of an inch. The upper section **50** has a width **60** of about nine-sixteenths (9/16) of an inch, while the strip **52** has a width **62** which varies from about one-quarter (1/4) of an inch proximate the upper section **50** to about one-eighth (1/8) near a bottom end **64** of the holder body **12**.

The retaining surface **14** retains the capillaries **30** to the holder **10** with at least a portion of the window section **28** exposed. Preferably, substantially the entire window section **28** is exposed to allow for maximum sensitivity of the electrophoretic system **32**.

As shown in Figure 1, the retaining surface **14** can comprise a plurality of holder tabs **66** extending from a front surface **68** of the holder body **12**. The holder tabs **66** are sized and shaped to receive one or more capillaries **30** and the size varies according to the number of capillaries **30** retained by the holder **10**.

In the embodiment shown in the figures, the holder tabs **66** are sized to securely retain eight capillaries **30** in a side-by-side, substantially coplanar position and each holder tab **66** includes a body section **7**0 extending forwardly from the front surface **68** about one-sixteenth (1/16) of an inch and a lip section **72** extending transversely from a proximal end **74** of the body section **70** about one-thirtysecondth (1/32) of an inch.

Referring to Figure 2, at least a first holder tab **66a** is attached proximate to the first edge **46** of the window section and a second holder tab **66b** is attached proximate the second edge **48** of the window section **28**. The first and second holder tabs **66a. 66b** securely retain the window section **28** and protect it from breaking during manufacturing and installation.

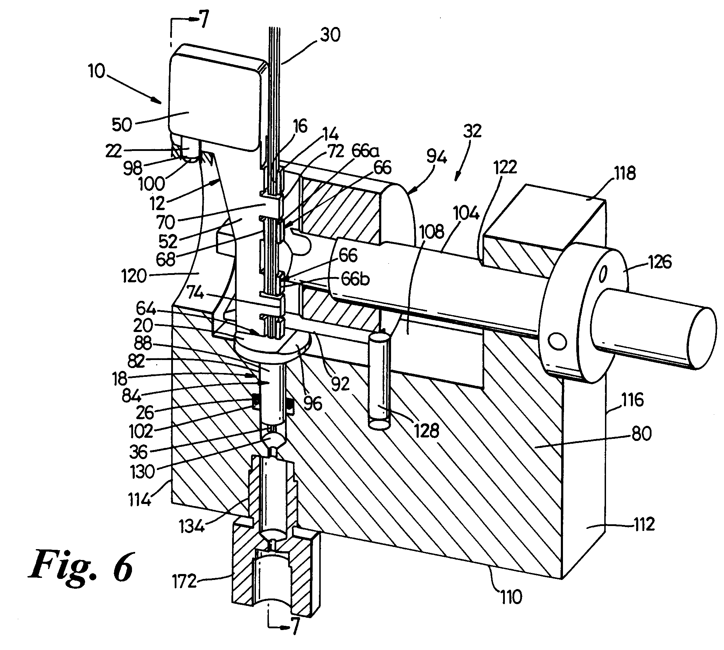

The embodiment shown in Figures 1 and 6 includes three holder tabs **66** above the window section **28** and three holder tabs **66** below the window section to secure the window section **28**. The lip sections **72** of the first and second holder tabs **66a, 66b** face the same direction. The lip sections **72** of the two holder tabs **66** above the first holder tab **66a** face opposite directions and the lip section **72** to the two holder tabs **66** below the second holder tab **66b** face opposite directions to facilitate easy installation of the capillaries **30** onto the holder **10**, to facilitate molding and retention of the capillaries **30**. Alternately, the number and shape of the holder tabs **66** can vary according to the design of the electrophoretic system.

An adhesive **16** such as a thermoset epoxy or the quick set epoxy sold under the tradename Trubond available at most hardware stores can be used to fixedly secure the capillaries **30** to the retaining surface **14**. Alternatively, any adhesive with relatively quick setting time and good adhesive strength or an adhesive used with double sided tape can be used to secure the capillaries **30** to the retaining surface **14**. The adhesive **16** must not adversely react with the retaining surface **14** or capillaries **30**.

Referring to Fig. 6, the mounting surface **18** retains the holder **10** to a mount **80**. The size and shape of the mounting surface **18** varies according to the design of the mount **80** and the number of capillaries **30** to be retained. The mount **80** includes a mount aperture **82** having a circular cross-section and the mounting surface **18** includes a tubular member **84** which extends downwardly from the bottom end **64** of the holder body **12**. The mount aperture **82** defines an interior surface of the mount **80**. An outer surface **88** of the tubular member **84** is sized to fit within the mount aperture **82** and an inner surface **90** of tubular member **84** is sized to receive the plurality of capillaries **30**.

In the embodiment shown in the Figures, the tubular member **84** is approximately one-half (1/2) inches long, the outer surface **88** has a diameter of about one-eighth (1/8) of an inch and the inner surface **90** has a diameter of about one-sixteenth (1/16) of an inch. The tubular member **84** includes a tapered proximal end **91** to facilitate insertion of the tubular member **84** into the mount aperture **82**.

As shown in Figures 1, 4 and 5, the first ends **36** of the capillaries **30** extend into the tubular member **84** to facilitate replacement of the support medium inside the capillaries **30**. Preferably, the first ends **36** of the capillaries **30** extend through and below the tubular member **84** for ease of installation of the capillary seal **24**.

The holder stop **20** retains the tubular member **84** in the mount aperture **82**. The holder stop **20** can be implemented in a number of alternate ways. For example, in the embodiment shown in the Figures, the holder stop **20** is a disk-shaped projection positioned between the holder body **12** and the tubular member **84**. The disk-shaped projection has a diameter larger than the diameter of the mount aperture **82** so that the holder stop **20** does not slide into the mount aperture **82**.

With reference to Figure 6, an exterior surface **92** of a parabolic reflector **94** slides over and contacts the holder stop **20** to retain the tubular member **84** in the mount aperture **82**. The holder stop **20** can include a forwardly facing, wedge-shaped lip **96** to facilitate the sliding engagement between the parabolic reflector **94** and the holder stop **20**. Alternately, a bolt (not shown) which extends through the holder stop **20** and threads into the mount **80** could be used to prevent the holder **10** from moving vertically.

With the capillaries **30** secured to the retaining surface **14**, the distance between the holder stop **20** and the window section **28** is held constant. Thus, the holder can be secured to a manufacturing stand (not shown) which removes the polyimide coating from the capillary **30** to create the window section **28** in the correct location. Subsequently, the window section **28** will be at the proper height in front of a focal spot (not shown) of the light source when the holder **10** is installed in the electrophoretic system **32**.

The alignment member **22** insures that the holder **10** and the capillaries **30** are properly aligned with the focal spot by preventing the holder **10** from rotating relative to the mount **80**. The alignment member **22** can also be implemented in a number of alternate ways. For example, in the embodiment shown in the Figures, the alignment member **22** is a right, cylindrical-shaped projection extending downwardly from the upper section **50** of the holder body. The projection is sized and shaped to fit within an upper aperture **98** of the mount **80**. The alignment member **22** inserted into the upper aperture **98** prevents the holder **10** from rotating relative to the mount **80** and therefore maintains the capillaries **30** in proper alignment with the focal spot of the light source. The alignment member **22** can include a tapered end **100** which facilitates insertion into the upper aperture **98**.

The holder **10**, including the holder body **12**, retaining surface **14**, mounting surface **18**, holder stop **20** and alignment member **22** are preferably manufactured as an integral unit for ease in manufacturing. The holder **10** can be molded from a hard plastic such as polyphenylene sulfide (PPS) or alternate materials such as acrylonitrile butadiene styrene (ABS).

Referring to Figs. 4 and 5, the capillary seal **24** seals an interface formed between the inner surface **90** of the tubular member and the external surface **44** of the capillaries. The capillary seal **24** must not be affected by the sample and the support medium and must not adversely affect the sample and the support medium. The capillary seal **24** can be an adhesive disposed in the inner surface **88** which is not adversely affected by the sample solution. An adhesive such as the aforementioned Trubond makes is a suitable seal. The first ends **36** of the capillaries are not enclosed by the capillary seal **24**.

The holder seal **26** seals an interface formed between the outer surface **88** of the tubular **84** and the interior surface of the mount aperture 82. With reference to Figure 6, the holder seal **26** can be an O-ring type seal which fits in a groove **102** in the interior surface of the mount aperture **82** to seal the outer surface **88** of the tubular member **84** and the interior surface of the mount aperture **82**. The O-ring type seal can be made of buna-n or some other material which is not adversely affected and does not adversely affect the sample solution.

The holder **10** secures the capillary or capillaries **30** to the mount **80**. The mount **80** can be part of a manufacturing stand (not shown) for manufacturing the capillaries **30**. During manufacturing, after the capillaries **30** are coated with the polyimide coating, the capillaries **30** can be installed into the holder **10** and the mounting surface **18** attached to the manufacturing stand. Subsequently, a laser (not shown) can be used to make the window section **28** by removing the polyimide coating. Since the position of the capillary **30** is fixed in the holder **10**, the distance between the holder stop **20** and the window section **28** is fixed so that the window section **28** is precisely cut into the capillary **30**.

Alternately, the mount **80** is part of the electrophoretic system **32**, the design of which can vary. Referring to Figs. 6, 7 and 8, the components of electrophoretic system **32** shown in the Figures includes the mount **80**, the parabolic reflector **94**, the holder **10**, the plurality of capillaries **30**, a reflector guide **104** and a support medium supply **106**. A light source for emitting a beam of light, a collector for collecting the beam of light, lenses for focusing the light from the light source and other components of the electrophoretic system are not included to simplify the Figures.

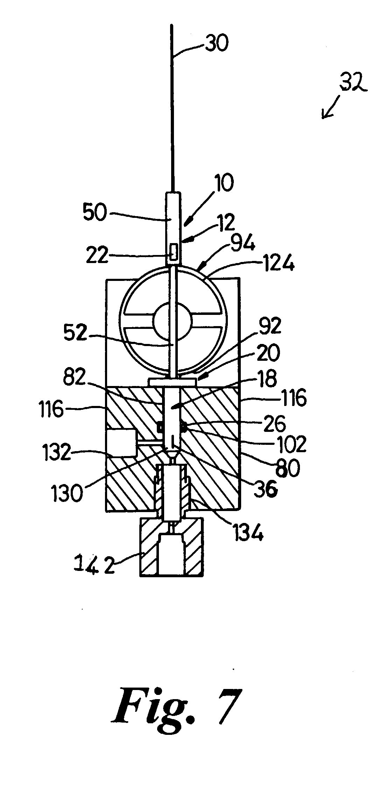

In the embodiment shown in Figs. 6 and 7, the mount **80** is rectangular having a top surface **108**, a bottom surface **110**, a front surface **112**, a rear surface **114** and opposed side surfaces **116**. A rectangular, front projection **118** extends upwardly from the top surface **108** proximate the front surface **112** and a rectangular, rear projection **120** extends upwardly from the top surface **108** proximate the rear surface **114**. The front projection **118** includes a guide aperture **122** extending therethrough to sliding receive the reflector guide **104**. The rear projection **120** includes the upper aperture **98** to receive and retain the alignment member **22**.

The parabolic reflector **94** is secured to the reflector guide **104**. The reflector guide **104** and the parabolic reflector **94** attached thereto slide relative to the mount **80** to facilitate installation of the holder **10** to the mount **80**. A guide stop **126** stops the reflector guide **104** from sliding too far and a guide pin **128** prevents the parabolic reflector **94** from rotating. Further, a front surface **124** of the parabolic reflector **94** can include a pair of opposed slots (not shown) to receive the capillaries **30**.

In the embodiment shown in Figure 6, installation of the holder **10** to the mount **80** requires that the parabolic reflector **94** and the reflector guide **104** moved away from the rear projection **120**. Next, the tubular member **84** is inserted into the mount aperture **82** with the alignment member **22** aligned with the upper aperture **98**. Subsequently, the parabolic reflector **94** and the reflector guide **104** are moved back towards the rear projection **120**. The parabolic reflector **94** retains the holder **10** to the mount **80**.

As previously mentioned, the holder **10** allows for support medium replacement without removing the capillary **30** from the mount **80**. An electrophoretic system providing for support medium replacement and useful with the prevent invention is described in detail in U.S. Application No. 08/518,285 (Beckman No. 129D-1276). As provided in U.S. Application No. 08/518,285, to facilitate the replacement process, the mount **80** includes a manifold **130** in fluid communication with an inlet port **132**, an outlet port **134**, and the mount aperture **82**.

Referring to Figs. 6, 7 and 8, the inlet port **132** is connected in fluid communication with the support medium supply **106** using conventional tubing **135**. The support medium supply **106** can be a pump or syringe which delivers a new support medium for testing. Alternatively, the support medium supply **106** can be a programmable delivery system (not shown). A first valve **136** is positioned between the inlet port **132** and the support medium supply **106**.

The outlet port **134** is connected in fluid communication with a waste reservoir **138** using conventional tubing **139**. A second valve **140** is positioned between the outlet port **134** and the waste reservoir **138**. Also, an electrode fitting **142** is threaded into the outlet port **134**. The electrode fitting 142 is used as one terminal for applying the electrical potential.

With reference to Fig. 6, 7 and 8, the tubular member **84** fits into the mount aperture **82** with the first end **36** of the capillaries extending into and in fluid communication with the manifold **130**. The capillary seal **24** and the holder seal **26** seal the interface between the first end **36** of the capillaries **30** and the manifold **130**. The second end **38** of the capillary is disposed in a run buffer **144**.

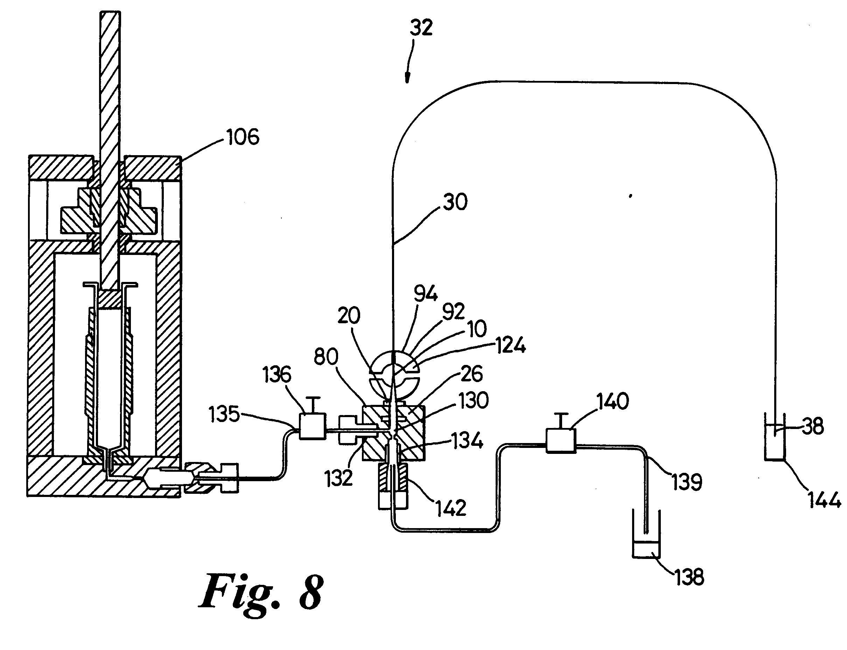

With reference to Figure 8, support medium replacement in the capillaries **30** can be accomplished with the following three steps. After each capillary **30** is purged of the old support medium, the second valve **140** is opened and the old support medium from the manifold **130** is purged into the waste reservoir **138.** With the first valve **136** open and the second valve **140** closed, fresh support medium is delivered through the inlet port **132** to the manifold **130** from the support medium supply **106**. The fresh support medium passes through the first valve **136** and enters the first end **36** of each capillary. The fresh support medium pushes the old support medium out the second end **38** of each capillary into the run buffer **144**.

Subsequently, after refilling the capillaries, the first valve **136** is closed and the second valve **140** remains open. The system is now ready for testing with the fresh support medium.

In operation, a high electrical potential is applied by a power supply (not shown) between the electrode fitting **142** and the run buffer **144**. The sample solution in the manifold **130** completes the electrical circuit between the electrode fitting **142** and the first end **36** of the capillaries. The electrical potential causes the sample in the capillary or capillaries to be separated into its components. As the sample components migrate from the first end **36** of each capillary towards the second end **38** of each capillary, the sample components pass the window section **28**. The light source is used to induce fluorescence of the separated components of the sample and such fluorescence is then detected by the collector for detection in a manner known to those skilled in the art.

The operation of a multiple capillary electrophoretic system is provided in U.S. Application No. 08/429,406 by S. Pentoney et al. filed April 26, 1995 (Beckman No. 45D-1324) and entitled "A Multicapillary Fluorescent Detection System", which is incorporated herein by reference.

The holder **10** provided herein has many advantages over the prior art holders, including supporting the window section **28** during manufacturing and installation into an electrophoretic system, maintaining the window section **28** in correct alignment in the electrophoretic system, securely retaining a plurality of capillaries, and allowing for separation support medium replacement without removing the capillaries from the electrophoretic system.

While the present invention has been described in considerable detail with reference to certain preferred versions, other versions are possible. For example, the alignment member **22** can comprise a projection (not shown) extending vertically on the outer surface **88** of the tubular member **84** and a corresponding groove (not shown) in the interior surface of the mount aperture **82**. Therefore, the scope of the appended claims should not be limited to the description of the preferred versions contained herein.

## Claims

1. A holder (10) for securing a capillary (30) having a window section (28) including opposed first and second edges to a mount (80), the holder (10) comprising:
(a) a retaining surface (14) for securing the capillary (30) proximate the opposed first and second edges to the holder (10), with a portion of the window section (28) exposed; and
(b) a mounting surface (18) for detachably securing the holder (10) to the mount (80) with the capillary (30) secured to the retaining surface (14).

2. A holder (10) for securing a capillary (30) having a window section (28) to a mount (80) having a support medium supply (106), the holder (10) comprising:
a retaining surface (14) for securing the capillary (30) to the holder (10) with a portion of the window section (28) exposed; and
a mounting surface (18) for securing the holder (10) to the mount (80) with the capillary (30) in fluid communication with the support medium supply (106).

3. A holder (10) for securing a plurality of capillaries (30) to a mount (80) each capillary (30) having a window section (28), the holder (10) comprising:
(a) a retaining surface (14) for securing the plurality of capillaries with a portion of each window section (28) of each capillary (30) exposed and with the window sections (28) being side by side and substantially coplanar; and
(b) a mounting surface (18) for detachably securing the holder (10) to the mount (80).

4. A holder (10) for securing a plurality of capillaries each having a window section (28) and a first end, to a mount having a mount aperture (82) defining an interior surface, the holder (10) comprising:
(a) a holder body (12) having (i) a retaining surface (14) for securing the plurality of capillaries to the holder (10) with a portion of each window section (28) of the capillary (30) exposed and with the window sections (28) being side by side and substantially coplanar, and (ii) a mounting surface (18) detachably securing the holder (10) to the mount (80), the mounting surface (18) including a tubular member (84) extending downwardly below the retaining surface (14), the tubular member (84) being sized and shaped to fit within the mount aperture (82), wherein, each of the capillaries is secured to the holder (10) with at least the first end (36) of each capillary (30) extending into the tubular member (84).
(b) a capillary seal (24) for sealing an interface formed between an external surface (44) of each capillary (30) and an inner surface (90) of the tubular member without enclosing the first end (36) of each capillary (30); and
(c) a holder seal (26) for sealing an interface formed between an outer surface (88) of the tubular member (84) and the interior surface of the mount (80).

5. The holder (10) of claim 1, or claim 2, or claim 3, or claim 4 wherein the retaining surface (14) comprises a plurality of holder tabs (66) extending forwardly from a front surface (68) of a holder body (12) for retaining the capillary or capillaries (30) .

6. The holder (10) of claim 2 wherein the or each capillary (30) is secured to a first holder tab (66a) proximate a first edge of the or each window section (28) and a second holder tab (66b) proximate a second edge of the or each window section to support the window section(s) (28).

7. The holder (10) of claim 1 comprising an adhesive (16) for fixedly securing the capillary (30) to the retaining surface (14).

8. The holder (10) of claim 1 or claim 2 wherein the retaining surface (14) is sized and shaped to retain a plurality of capillaries with a portion of each window section (28) of each capillary (30) exposed and with the window sections (28) being side by side and substantially coplanar.

9. The holder (10) of claim 1, or claim 2, or claim 3 wherein the mounting surface (18) comprises a tubular member (84) extending downwardly from a bottom end (64) of a holder body (12), the tubular member (84) being sized and shaped to fit within an interior surface of the mount (80).

10. The holder (10) of claim 9 wherein the capillary (30) is secured to the holder (10) with at least a portion of a first end (36) of the capillary (30) extending into the tubular member (84).

11. The holder (10) of claim 10 further comprising a capillary seal (24) for sealing an interface formed between an external surface (44) of the capillary (30) and an inner surface (90) of the tubular member (84).

12. The holder (10) of claim 9 wherein the capillary (30)or each of the capillaries (30)is secured to the holder (10) with at least a portion a first end (36) of the or each capillary (30) extending into the tubular member (84) and the holder (10) comprises a capillary seal (24) for sealing an interface formed between an external surface (44) of the or each of the capillaries (30) and an inner surface (90) of the tubular member (84), preferably without enclosing the first end of the or each capillary (30).

13. The holder (10) of claim 9 further comprising a holder seal (26) for sealing an interface formed between an outer surface (88) of the tubular member (84) and the interior surface of the mount (80).

14. The holder (10) of claim 9 wherein the mounting surface (18) comprises a holder stop (20) for retaining the tubular member (84) inside the interior surface of the mount (80).

15. The holder (10) of claim 9 wherein the holder (10) comprises an alignment member (22) for preventing the tubular member (84) from rotating relative to the interior surface.

16. The holder (10) of claim 9 wherein the mounting surface (18) comprises (i) a holder stop (20) for retaining the tubular member (84) inside the interior surface of the mount (80) and (ii) an alignment member (22) for preventing the tubular member (84) from rotating relative to the interior surface.

17. The holder (10) of claim 1 or claim 3 wherein the mounting surface (18) secures the holder (10) to the mount (80) with the capillary (30), or at least one of the plurality of capillaries in fluid communication with a support medium supply (106).

18. A capillary electrophoresis system comprising:
a mount (80); and
(a) the holder (10) of claim 1 or claim 2 securing a capillary to the mount (80), or
(b) the holder of claim 3 or claim 4 securing a plurality of capillaries to the mount (80).
